(19) Europäisches Patentamt
European Patent Office
Office européen des brevets

(11) **EP 3 821 688 B1**

(12) **EUROPEAN PATENT SPECIFICATION**

(45) Date of publication and mention
of the grant of the patent:
**03.09.2025 Bulletin 2025/36**

(21) Application number: **20194102.8**

(22) Date of filing: **02.09.2020**

(51) International Patent Classification (IPC):
***A01C 21/00*** *(2006.01)*

(52) Cooperative Patent Classification (CPC):
**A01C 21/007**; A01C 21/00

(54) **IN SITU AGRONOMIC EXPERIMENTATION APPLICABLE TO INTEGRATED FERTILIZER MANAGEMENT (IFM)**

ZUR INTEGRIERTEN DÜNGEMITTELVERWALTUNG (IFM) ANWENDBARES AGRONOMISCHES IN-SITU-EXPERIMENTIEREN

EXPÉRIMENTATION AGRONOMIQUE IN SITU APPLICABLE À LA GESTION INTÉGRÉE DES ENGRAIS (GIE)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2019 FR 1912664**

(43) Date of publication of application:
**19.05.2021 Bulletin 2021/20**

(73) Proprietor: **Polyor SARL**
**54000 Nancy (FR)**

(72) Inventor: **CLAUDE, Pierrre-Philippe**
**54000 Nancy (FR)**

(56) References cited:
**EP-A1- 3 335 536    WO-A1-01/45490**
**WO-A1-2013/168483**

EP 3 821 688 B1

**Description**

On-farm agronomic experimentation is essential for the development of *integrated fertilizer management* (ifm) but too often imprecise due to the sampling error of field plots whose physicochemical characteristics vary appreciably over short distances. Experimental setups with homogeneous micro-plots arranged randomly within blocks are not always suitable or cost-effective when assaying in situ the efficacy of a novel fertilizer. Simple side-by-side control and treatment strips are thus often used to measure yield increases. However, statistically, such one-on-one comparisons are insignificant and cannot effectively assay treatment effects on any particular plot. All in all, this state of the affairs reduces the farmer's autonomy vis-à-vis agribusiness carrying our these on-farm trials.

The determination of N-fertilizer recommendations using traditional multivariable N-balance methods is also too often imprecise since sampling and measurement errors for each variable accumulate. For instance, the Comifer 2017 N-balance method widely used in France for calculating such N-fertilizer recommendations is now under scrutiny (Ravier et al. 2015, 2016, 2017).

These two (2) imperfections of on-farm agronomic experimentation - i.e. the irrelevant strip-plots as controls *and* the imprecise, error prone and at times arbitrary N-fertilizer recommendations are particularly troublesome when it comes to crop *onput* fertilization technologies (alias from the French - *fertilisation non-pondérales* - FNP) such as so-called biofertilizers and biostimulants (http://www.biostimulants.fr/; http://www.biostimulants.eu/). FNP/onputs are often merely pre-existing technologies such as phytohormones, oligo-elements, elicitors, symbiotes, etc. opportunistically rebranded. Recently, a plethora of such concepts have been marketed, insistently. The agronomic consequence of the FNP/onputs is however marginal as compared to those of conventional mineral N, P, S & K macronutrient bulk fertilisers. Again, the aforesaid side-by-side treatment/control comparisons cannot properly assay the agronomic contribution of such marginally effective FNP/onputs. This leads to confusion and uncertainty as to their proper positioning and use.

For instance, the Comifer 2017 N-balance method does not account for the activity of free-living soil borne azotobacteria but simply assumes that N-gains through *non-symbiotic N-fixation* ($F_{ns}$) merely compensate gaseous N-losses by denitrification and that the overall N contribution of $F_{ns}$ is thus null or negligible. Though an alternative method integrating of $F_{ns}$ in N-fertilizer recommendations (EP3335536) has since been proposed, it involves the complex and at times tedious calculation of a series of indices of azotobacterial activity which limits the development *azotobacterial fertilization* (AZB™; Claude and Fillion 2004).

Still, crop FNP/onputs are essential for the reduction of yield gaps and increased yield potentials. Yield gaps are the difference between the potential and actual yields. According to Schils et al. 2018, yield gaps across Europe for rainfed wheat warrant on average an additional 90 kg-$N_{fertilizer}$ per hectare. This said, the nitrogen use efficiency (NUE) of this additional N-fertilizer must be increased to insure its agroecological compatibility. *Azotobacterial fertilization* (AZB™; Claude et Fillion 2004, www.en.polyor.fr) can in theory do both - increase potential yield *and* the NUE of such mineral N-fertilizers supplements. AZB™ may in this sense is a truly effective FNP/onput. Other methods of fertilizing are known from WO 2013/168483 A1 and WO 01/45490 A1.

Effective FNP/onputs such as AZB™ will thus affect - but not necessarily reduce, N-fertilizer recommendations. If properly tuned, these N-recommendations will *synergize* with FNP/onputs such as AZB™. This synergy is fast becoming an essential part of *integrated fertilizer management* (ifm) since the increased N-fertilizer use efficiency (NUE) attributable to AZB™ lessens the degradation of soil organic matter and the level of post-harvest residual mineral-N (PHN) (see below). These sustainable levels of NUE and PHN contribute to the conservation of soil organic carbon and nitrogen stocks as if the supply of N through soil organic matter mineralisation (degradation) was by definition $\equiv 0$ and the rate of formation and mineralisation of organic N are equal so that soil organic matter per se is not a net contributor of N to the crop. This approach to soil organic matter conservation is a small revolution in itself.

The technical problem being addressed here thus resides in on-farm the measurement of the efficacy of these FNP/onputs at the field level given that their marginal effect on yield is often via an increased NUE of more conventional mineral N-fertilizers. The idea is to detect - in situ at the field level - the relative efficacy of such FNP/onputs and to integrate this level of efficacy in the calculation of N-fertilizer recommendations. From the user's perspective this must be done routinely at the field (plot) level.

The technical solution proposed herein consists in replacing traditional control paired plots, or "strips", by pedoclimatic and plot-specific *references* (rSQ). These rSQ references are advantageously obtained by meta-modelling of georeferenced pedoclimatic data knowing only the latitude & longitude coordinates of the plot. It is thus possible to obtain a precise estimate of the relative effectiveness of the FNP/onputs being assayed and then adjust N-fertilizer recommendations accordingly. This assessment is inherently impartial since the farmer can - for and by himself - ascertain the effectiveness of the FNP/onput. Though such geospatial extrapolation techniques by meta-modelling are known (Nolan et al. 2012, 2015 and 2018; Sparks et al. 2011; Luo et al. 2013), they have never been used to expressly replace the use of paired control plots for in situ on-farm agronomic experimentation, and even less so for the calculation and adjustment of N-fertilizer recommendations.

The present invention is thus a method of agronomic experimentation and integrated fertilizer management according to claim 1.

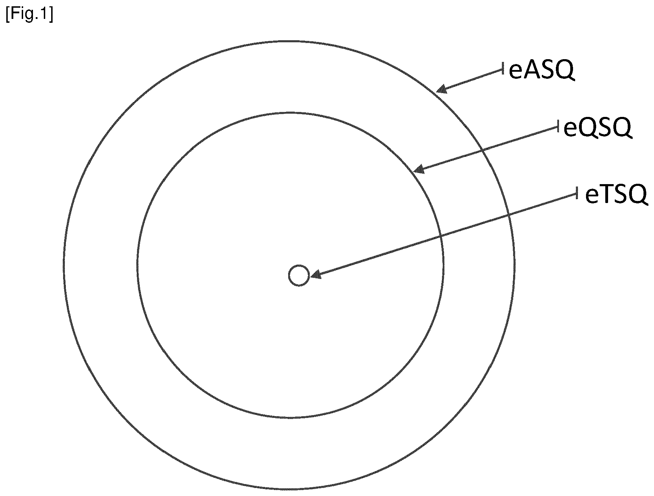

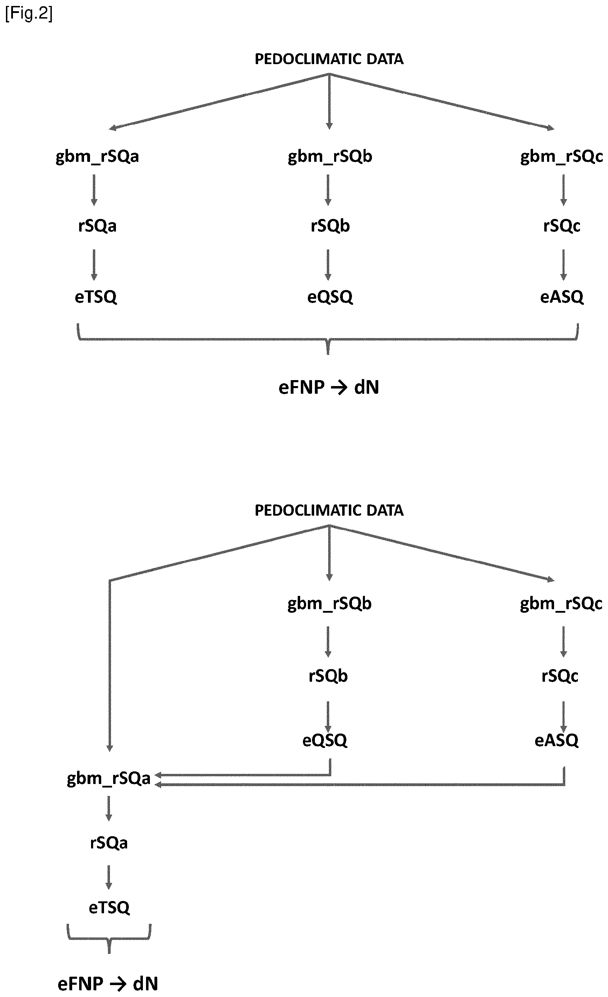

The [TSQ/rSQa - 1] ratio is adjusted by subtracting [QSQ/rSQb - 1] according to the equations 2 and 4, i.e. QSQ = annualized plot target RDT / average iSQ for that plot, geographic zone or mapping unit (Figure 1), and knowing that rSQb is the aforesaid agronomic productivity reference for that particular plot, zone or mapping unit and that the aforesaid target RDT is advantageously and for instance the five-year agronomic yield average for that plot reflecting the level of technicity of the farmer as applied to that plot. Also, QSQ and rSQb can instead be used as variables - *predictors* in AI parlance - of rSQa in the calculation of the relative effectiveness of TSQ as TSQ/rSQa (eTSQ). These two alternative ways of carrying out the invention are depicted in Figure 2.

Similarly, the [TSQ/rSQa - 1] ratio is adjusted by subtracting [ASQ/rSQc - 1] according to the equations 2 and 5, i.e. ASQ = annualized local or regional potential RDT / average iSQ for that geographic zone or mapping unit (Figure 1), and knowing that rSQc is the aforesaid agronomic productivity reference for that particular geographic zone or mapping unit and that the aforesaid potential RDT is advantageously and for instance the annual local or regional agronomic crop yield average for the nearest zone, administrative and/or pedoclimatic mapping unit such as for example a French *région, department* or *canton.* Here also, ASQ and rSQc can instead be used as variables - *predictors* - of rSQa in the calculation of the relative effectiveness of TSQ as TSQ/rSQa (eTSQ). The values of rSQb and rSQc are obtained by meta-modelling of the pedoclimatic data from the aforesaid nearest zone, administrative and/or pedoclimatic mapping unit against the average agronomic crop yields in those mapping units. Again, see Figure 2 for a schematic representation of these two different embodiments.

iSQ for its part is an agronomic productivity index for the plot, is a representative function of the soil's capacity to supply water and nutrients to the plant and act as a rooting matrix for optimal potential agronomic yield. More particularly, iSQ is a soil productivity index in terms of agronomic yield derived from a coherent system of soil function-based ecosystem provisioning biomass, food and fodder and by definition representative of the agro-pedoclimatic character of the plot and the potential aboveground biomass production over time - regardless of the fertilization rate and cultural practices.

The metamodeling used to obtain estimates of rSQa, rSQb and rSQc consists of an automated *machine* - or model - learning algorithm, and more specifically of the boosting type, i.e. an automated learning technique for regression and classification problems which produces a prediction model in the form of an ensemble of weak prediction models - typically decision trees, in a stepwise fashion and generalizes them via an optimization of an arbitrary differentiable loss function so as to convert weak learners into powerful ones iteratively.

The pedoclimatic data characteristic of the said agronomic plot are geolocated and accessible as such via interactive - advantageously opensource - databases, and advantageously include predictors of mineralization rates of soil organic matter and wind and/or water soil erosion rates.

Finally, eFNP advantageously pertains to eAZB, and pFNP to pAZB in the presence of azotobacteria-treated soil borne crop residues (RCS) - by inoculation for instance, allowing for the calculation of recommended doses of N-fertilizer (dN) as follows;

$$dN = a \times pRDT - pAZB$$

given that;

- $a = \boldsymbol{b}/eAZB_{run}$, $\boldsymbol{b}$ being the fertilizer N-requirement per unit yield as defined for instance in Comifer (2017),

- $pAZB = pRDN - [RDN / eAZB_{rdn}]$, i.e. the contribution (supply) in N by the AZB, knowing that $pRDT = [RDT - eAZBrdt]$ and $pRDN = [RDN - eAZBrdn]$ are the adjusted target agronomic and protein yields, respectively, and that,

- $eAZB_{rdn}$ and $eAZB_{run}$ the eAZB values in terms of RDN and RUN alias *nitrogen fertilizer use efficiency* (NUE) - respectively.

Again, the thus recommended N-fertilizer doses comprised of otherwise conventional fertilizer materials are split and applied conventionally in-field to the soil or foliage.

**Acronyms et definitions**

$\boldsymbol{b_{Arvalis}}$ or simply herein $\boldsymbol{b}$: mineral N-requirements per unit yield of the crop expressed as the number of nitrogen (N) units (uN; kg-N/ha) to obtain the targeted grain & protein yields. This variety specific value, often in the where abouts of 3.00 for winter cereals such as wheat - is used to calculate $N_{fertilizer}$ recommendations with the N-balance method (Comifer 2017).

**a:** a proxy of **b** herein defined as b/eFNPrun

**FNP** (fertilisations non-pondérales, fr.): integrated fertilizer management (ifm) technologies such as biofertilizers, biostimulants and more particularly herein azotobacterial fertilization (AZB™; Claude and Fillion 2004) also referred to in English as crop onputs as opposed to a priori more tradition inputs. FNP's effect on yield is often disproportionate and/or qualitative in comparison to their mass.

**AZB:** azotobacterial fertilization as defined by Claude and Fillion 2004 is a particular FNP involving the spray inoculation of azotobacteria onto soil borne cellulosic crop residues **(RCS,** alias résidues de culture au sol), eg. soil borne cereal straw after harvest.

**eFNP$_{rdt}$, eFNP$_{rdn}$ & eFNP$_{run}$:** relative efficacies of FNP/onput technologies as compared to some sort of non-treated control, or better still to a plot specific pedoclimatic reference (rSQ) calculated according to Equation 2, in terms of grain yield(rdt), grain protein yield (rdn) & rdn per unit of N-fertilizer (run).

**eNPK$_{rdt}$, eNPK$_{rdn}$ & eNPK$_{run}$:** relative efficiencies of the aforesaid N, P and K fertilizer recommendations in terms of agronomic, protein and per unit of N, P and/or K applied as fertilizer when compared to the conventional balance-sheet derived recommendations. Herein, there eNPKs are a function of the aforesaid eFNP values according to equations 7 to 10.

**ifm:** integrated fertilizer - or nutrient, management refers to the maintenance of soil fertility and of plant nutrient supply at an optimum level for sustaining productivity through optimization of the benefits from all possible sources of organic, inorganic and biological components. Herein, ifm integrates the aforesaid FNPs and in particular azotobacterial fertilization (AZB™, Claude et Fillion 2004), as well as the calibration of N-fertilizer recommendations as a function of the relative efficacies of such FNP/onputs (eFNP).

**gbm** (generalized boosted models - or machines): a machine learning technique for regression and classification which produces a prediction model in the form of an ensemble of weak prediction models - typically decision trees - in a stage-wise fashion and generalizes them via an optimization of an arbitrary differentiable loss function (Wikipedia).

**pFNP$_{rdt}$ & pFNP$_{rdn}$:** agronomic potential of FNPs as defined herein by equation 7. pFNP represents the quantity of nutrients - N for instance, supplied to the soil-plant system as a result of FNP efficacy.

**RDT, RDN** and **RUN:** grain yield (per hectare), grain protein yield (per hectare) and grain protein per unit of N-fertilizer ($N_{protein}/N_{fertilizer}$ ; uN/uN), the latter also known as nitrogen-fertilizer use efficiency **(NUE)** a priori unaffected by the FNP/onput being assayed.

**TSQ, QSQ & ASQ:** Proxy values of treatment, target and annual yields at the plot, local and regional levels - respectively and as proposed herein in Figure 1, when adjusted for some sort of soil productivity index - **iSQ.** Formally, TSQ (Equation 3) QSQ (Equation 4) and ASQ (Equation 5) can then be further divided by rSQa, b & c, respectively, as proposed in Equation 2.

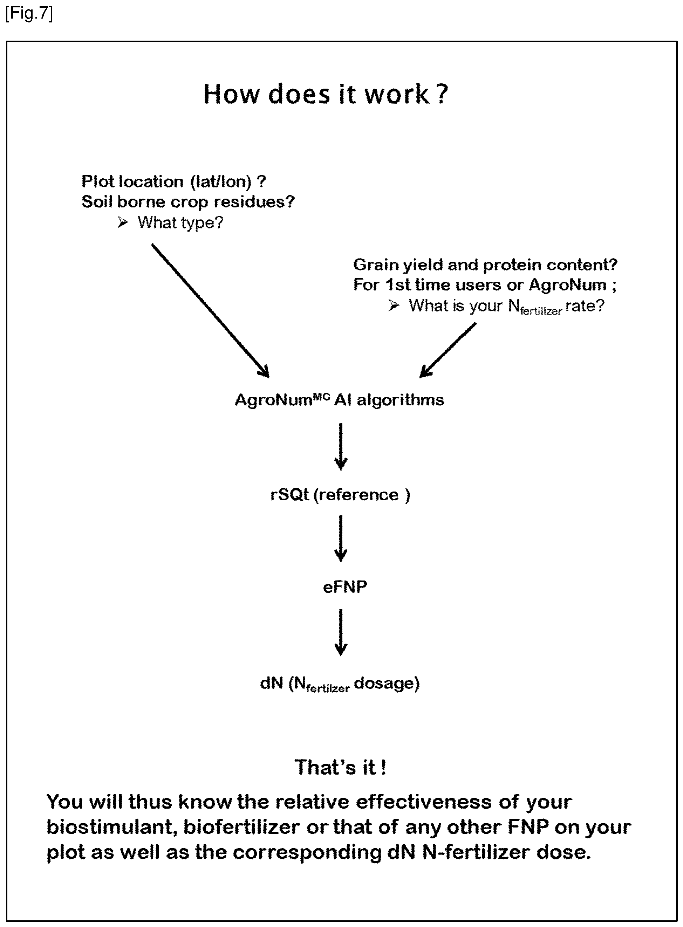

**iSQ:** soil productivity indices in terms of agronomic yield derived from a coherent system of soil function-based ecosystem provisioning biomass, food and fodder, for instance according to the work of Tóth et al. 2013 (cf. sqicrop1 index; op. cit. figure 7). These indices integrate the pedoclimatic character of the plot and the potential aboveground biomass production regardless of the fertilization rate and cultural practices.

**rSQa, rSQb & rSQc:** pedoclimatic references for a particular plot obtained by meta-modeling of pedoclimatic data. These references - as opposed to mere checks, controls or untreated "strips" - are used as denominators applicable to the aforesaid TSQ, QSQ and ASQ, respectively, in terms of RDT (rSQa_rdt, rSQb_rdt & rSQc_rdt), RDN (rSQa_rdn, rSQb_rdn & rSQc_rdn) and RUN (rSQa_run, rSQb_run & rSQc_run). These rSQ are determined using artificial intelligence (AI) based algorithms such as gbm and represent a sort of baseline level of productivity as a reference against which treatment (TSQ), target (QSQ) and meteorological (ASQ) yield effects can be assayed to determine the efficacy of any particular FNP including herein azotobacterial fertilization (AZB™).

[Equation 1]

$$eFNP = f[(eTSQ, eQSQ, eASQ)] = gbm(latidude, longitude)$$

[Equation 2]

$$eFNPrdt, rdn, run = \left[\frac{TSQ}{rSQa} - 1\right] - \left[\frac{QSQ}{rSQb} - 1\right] - \left[\frac{ASQ}{rSQc} - 1\right]$$

[Equation 3]

$$TSQrdt, rdn, run = \frac{RDT, RDN \& RUN}{iSQ\ for\ that\ plot}$$

[Equation 4]

$$QSQ = \frac{annualized\ plot\ target\ RDT}{iSQ\ for\ that\ plot\ or\ zone\ or\ mapping\ unit}$$

[Equation 5]

$$ASQ = \frac{annualized\ local\ potential\ RDT}{iSQ\ for\ that\ zone\ or\ mapping\ unit}$$

[Equation 6]

$$rSQa, b, c = \frac{non\ treated\ control}{iSQ} = gbm(latidude, longitude)$$

[Equation 7]

$$dN = a\ x\ pFNPrdt - pFNPrdn$$

[Equation 8]

$$pFNPrdt = RDT\ x\ eFNPrdt$$

[Equation 9]

$$a = \frac{b_{Arvalis}}{eFNPrun}$$

**Figures**

[Figure 1] : Proposed geographical breadth of the pedoclimatic data used to derive rSQa, rSQb & rSQc pedoclimatic references for the determination of the relative contribution of treatment (eTSQ) and target (eQSQ) and annual meteorological (eASQ) yield levels. For instance, eTSQ & rSQa relevant data are obtained at the plot level, eQSQ & rSQb data at the local level (eg. county, or *canton* in France) and eASQ & rSQc data at the regional (eg. state or *région* in France). eTSQ, eQSQ and eASQ here being the ratios TSQ/rSQa, QSQ/rSQb and ASQ/rSQc, respectively (Equation 1).

[Figure 2]: Schematic representation of the flow of pedoclimatic data through the three (3) different gbm-like models (Table 1) generating three (3) different pedoclimatic references - rSQa, b & c - applicable to TSQ (equation 3), QSQ (equation 4) and ASQ (equation 5), respectively. The ratios between T, Q & ASQ and their respective rSQa, b & c pedoclimatic references - i.e. eTSQ, eQSQ & eASQ (equation 1 & Figure 1) are proxies of the gross effect of the treatment being assayed (TSQ), the target yield (QSQ) and the annual meteorological conditions (ASQ) on crop yield. If the geographic resolution of the pedoclimatic data is high, these three (3) different effects can be combined arithmetically as proposed in equation 2 (top figure) to obtain the true level of efficacy of the treatment being assayed, eFNP (Equation 1) in terms of grain yield (rdt), grain-protein yield (rdn) and grain-protein per unit of N-fertilizer (run). eFNP can then be used to readjust these N-fertilizer recommendations (dN) according to equations 7 to 10. The geographic resolution of opensource pedoclimatic data being rarely sufficient, a more robust and versatile embodiment of the invention is to include the aforesaid eQSQ and eASQ as predictors directly in the gbm-like model generating rSQa. eTSQ thus integrates eQSQ & eASQ and is de facto an estimate of eFNP used to estimate the corresponding dN value (bottom figure). This latter approach was used for the validation of the invention reported herein.

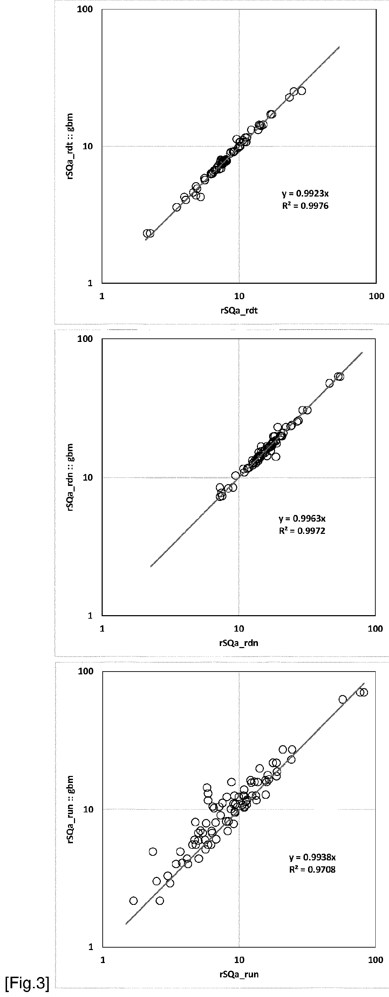

[Figure 3]: Regression of the pedoclimatic references (rSQa) - $\log_{10}$ - in terms of cereal grain yield (_rdt), protein yield (_rdn) and N-fertilizer use efficiency (_run) estimated using 90 conventional paired control plots (X axis) on those obtained by the aforesaid gbm meta-modelling according to the present invention (Y axis). The meta-modelled rSQ's (:: gbm ) are indeed closely related to these observed values and can thus be used as proxies when evaluating eFNP for the determination of dN. The paired control plots in situ experiments harvested in 2001 to 2015 in France are described in www.polyor.fr.

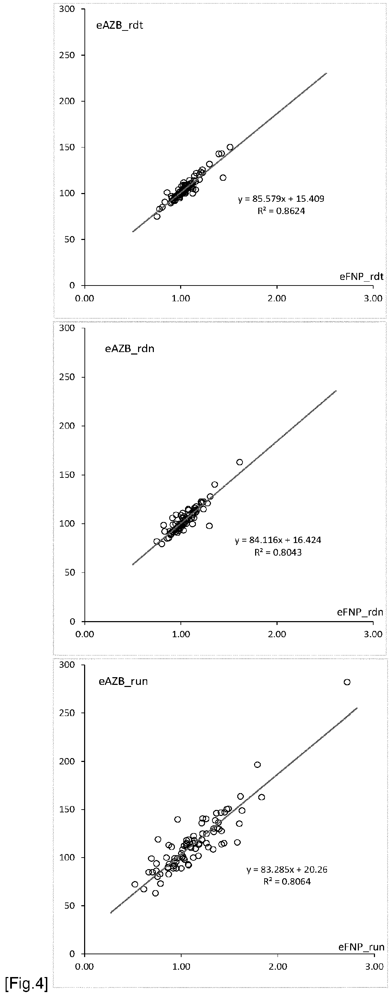

[Figure 4]: Graphical representation of the validation data from azotobacterial fertilisation (AZB) field trials in France (2001 to 2015). The relative efficacy - $\log_{10}$ - of AZB (eAZB) via the aforesaid rSQa (Figure 3) of neighbouring paired non-treated control strips is very comparable to the gbm predicted relative efficacy of AZB (eFNP) in terms of grain yield (eAZB_rdt), protein yield (eAZB_rdn) and N-fertiliser use efficiency (eAZB_run).

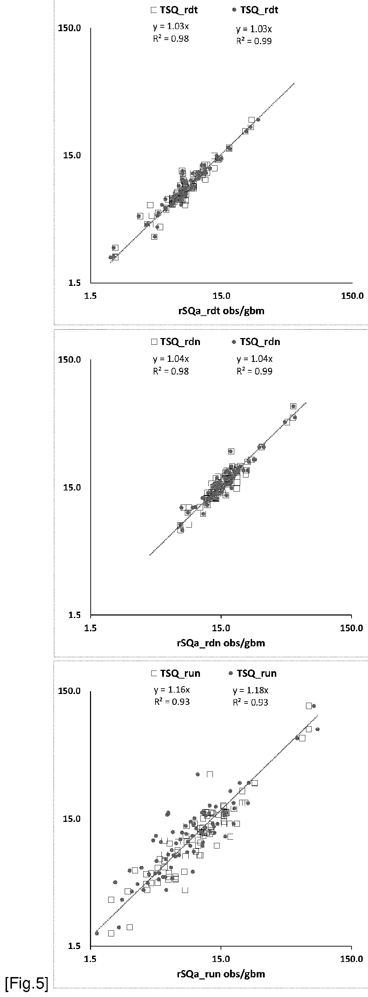

[Figure 5]: Further validation using AZB field data referred to in Figures 3 and 4 via the slopes of the linear functions of the observed (filled circles) and gbm-derived (open squares) TSQ values in relation to their corresponding rSQa_rdt, rSQa_rdn & rSQa_run (Equations 1 to 6). These TSQ/rSQa slopes are indeed very comparable to the observed eAZB_rdt, _rdn and _run values as reported in Claude and Fillion 2004 and subsequently in Polyor 2019a, 2019b, 2019c, 2019d & 2019e as made available on www.polyor.fr.

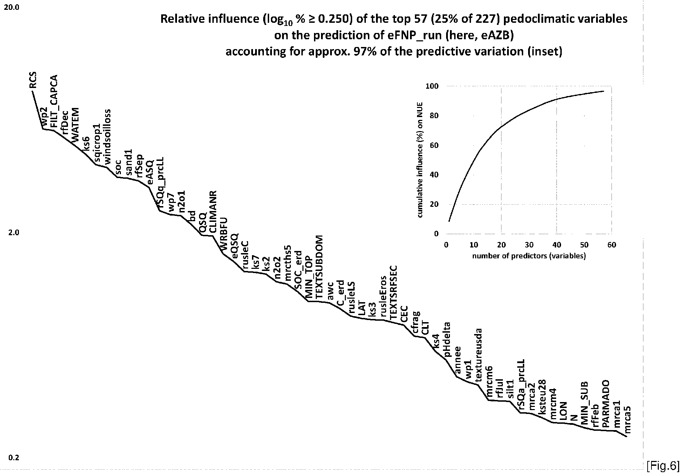

[Figure 6]: Feature plot of the gbm run generating rSQa, b & c used for Figures 3, 4 & 5. The most important - or influential - variables appear at the top of the function and the least latter on at the tail end. Here, the 57 of 227 most influential pedoclimatic variables are portrayed; their description, source and numerical values are in Table 2.

[Figure 7]: Schematic representation taken from www.polyor.fr explaining how the invention can be put to use in *integrated fertilizer management* (ifm) for the sake of determining FNP/onput compatible dN N-fertilizer doses for field crops such as winter cereals, wheat and rapeseed.

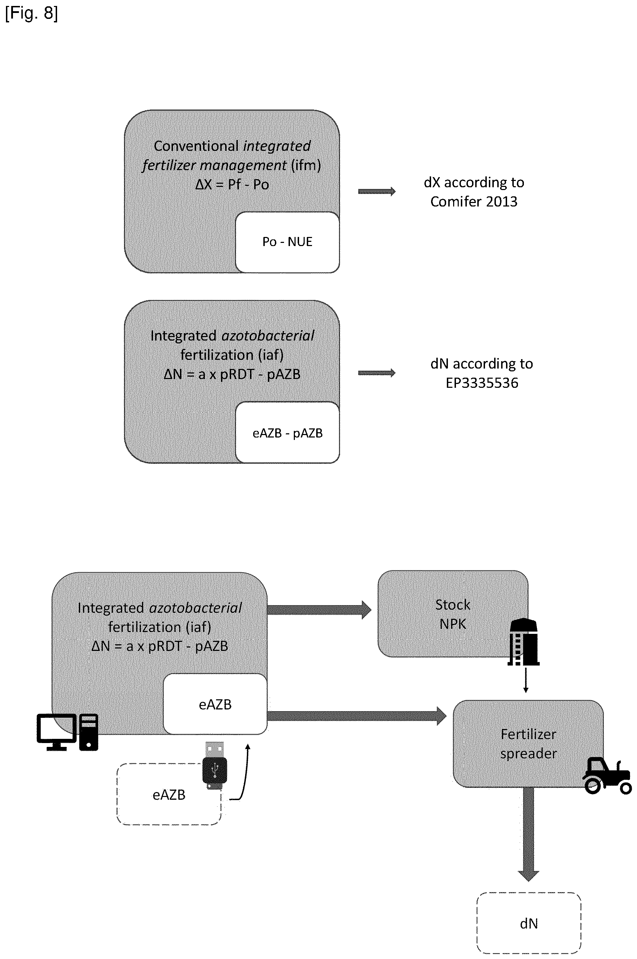

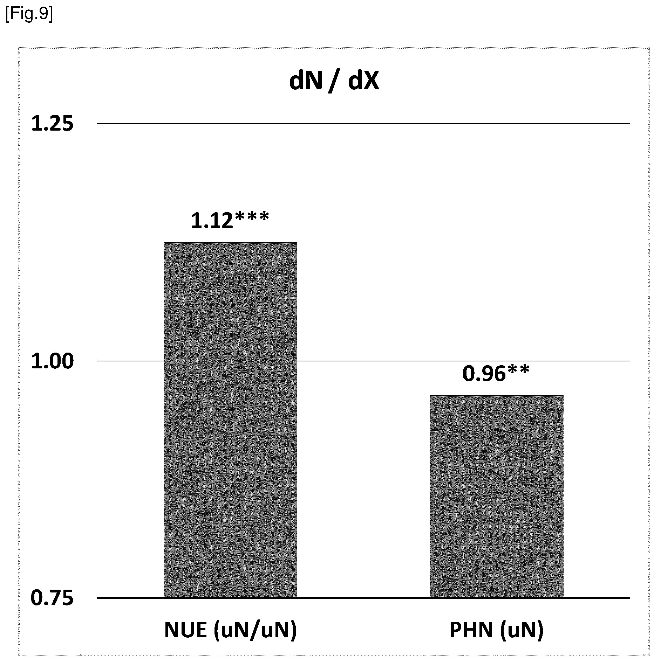

[Figure 8]: Integration of the relative efficacy of FNP/onputs (eFNP) - for instance eAZB in this particular case, in the calculation of dN N-fertilizer recommendations applicable to *integrated fertilization management* (ifm) such as AgroNum™ (www.polyor.fr). A priori, ifm can be carried out using state of the art software such as AZODYN™, AZOFER™, AZOBIL™, Clé de Sol™ or adapt-N™. Such platforms can now be substantially be modified - or simply circumvented and made obsolete, using gbm-like algorithms as proposed herein. The presented invention also in some way similar to the so-called *efficiency equation,* i.e. dX = (Pf - Po) / CAU, proposed by the Comifer (2017). This equation is however merely derived from the balance-sheet method, Po being the amount of mineral N supplied to crop by the soil and CAU (*coefficient apparent d'utilisation*) the nitrogen fertilizer use efficiency *alias* NUE (or Ef - van Es et al. 2019). The present invention replaces these Po & CAU notions by those of pAZB$_{rdn}$ & eAZB, and more generally pFNP$_{rdn}$ (equations 7 & 10) and eFNP (equations 1 & 2). However, this innovative approach to ifm - AgroNum™ (www.polyor.fr), can integrate FNP/onputs such as AZB™ and insure its synergy with mineral N-fertilizers leading to increased NUE and the lower PHN (Figure 9). The invention is thus a method for applying a calibrated amount of N-fertilizer to a field plot knowing that the fertilizer spreader is controlled using existing robotic devices and technologies so that the proper amounts of N from bulk fertilizer stocks are dispensed accordingly into the fertilizer spreader's tank prior to spreading.

[Figure 9]: Effectiveness of AZB™ in terms of increased NUE (nitrogen fertilizer use efficiency, alias RUN). AZB™ effectiveness is ascertained given a significant 12% increase in the dN/dX ratio knowing that dN is a function eAZB according to the present invention and that dX is calculated using the traditional N-balance sheet Comifer (2017) approach. The level of post-harvest residual mineral-N (PHN; uN) is also significantly reduced as a result of this calibration of dN as a function of eAZB. This increased NUE and reduced PHN make AZB™'s contribution to ifm that much more sustainable insuring that residual mineral-N does not promote soil organic matter degradation and/or non-point source pollution of groundwater via nitrate leaching.

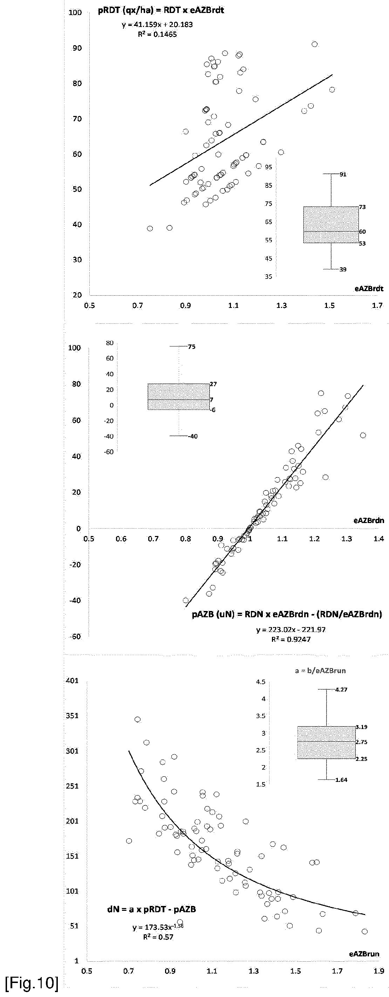

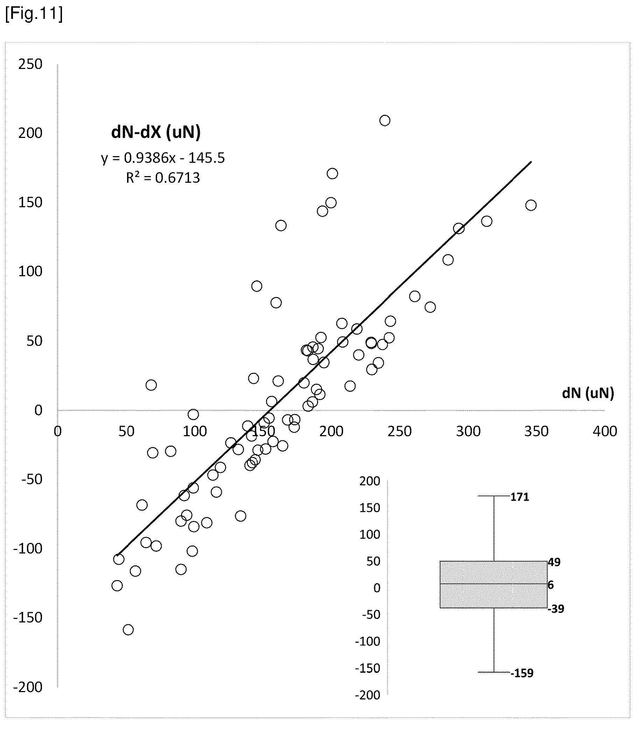

[Figure 10]: Consequences of the invention in terms of potential wheat grain yield (pRDT = [RDT x eAZBrdt] - top), increased N supply (pAZB = [RDN x eAZBrdn] - [RDN / eAZBrdn] - middle) and reduced N-fertilizer requirements (a) and recommendations (dN = [pRDT - pAZB] - bottom) as a result of azotobacterial fertililzation (AZB™; Claude et Fillion 2004). Potential grain yield (pRDT) will increase as a function of eAZBrdt though somewhat haphazardly (top). AZB-derived N-supply (pAZB) is more linear (middle) though this N contribution to the soil plant system is still somewhat suboptimum as compared to data published by Ladha et al. 2016 and to the additional $\approx$ 40 kg N-fertilizer supposedly needed to close the wheat yield gap in France (Schils et al. 2018). Azotobacterial fertilization (AZB™) as assayed using these 2001-2015 agronomic field data thus still needs to be improved. Though N-recommendations (dN) are not reduced by AZB - *au contraire*! (see Figure 11), increased N-fertilizer needs attributable to increased pRDT will be partially offset by eAZBrun which tends to reduce dN as a result of lower N-requirements (a ; inset).

[Figure 11] : Consequences of the invention in terms of [dN - dX], i.e. the difference between the N-fertilizer doses recommended by the balance sheet method (dX ; Comifer 2017) and those recommended according to the present invention (dN ; AgroNum™ - www.polyor.fr). Though on average dN differs little from dX (+6 kg-N/ha, inset), on any given plot this difference can be approximately +/- 50 uN (kg-N/ha). Interestingly, dN is more often superior to dX suggesting that higher N-fertilizer doses do not necessarily inhibit azotobacterial N-fixation but rather partially fulfill the crops greater N requirements as a result of increased yield potential (pRDT).

The invention was validated using on-farm yield data on the effectiveness of azotobacterial fertilization (AZB™; Claude and Fillion 2004, WO03046156), a particularly promising form of FNP/onput technology given the absence of plant-microbe interactions too often responsible for the counterproductive diversion of photosynthates. As previously mentioned herein, this data comes from agronomic trials carried out in France from 2001 et 2015 (www.polyor.fr).

To predict the relative efficacy of AZB (eAZB) in terms of grain yield (RDT), protein yield (RDN) and protein yield per unit of N-fertilizer (RUN, alias NUE), these yield data were tabulated within a vast array of pedoclimatic data (227 variables) and fed to an artificial intelligence algorithm such as a gradient boosting *machine* (or *model;* Ridgeway 2019, McCaffrey et al. 2013, Kuhn 2008, Freund & Schapire 1997). These non-gaussian AI algorithms do away with decision rules and degrees of freedom characteristic of gaussian statistical models. Instead, variables - predictors in AI parlance - are weighted according to their influence (Table 2_b). Models of this type can be implemented in R with the gbm package (https://cran.r-project.org/web/packages/gbm/gbm.pdf).

Pedoclimatic variables need only be relevant & informative. For instance, variables were here chosen from sources referenced in Table 2 and structured as proposed in Table 1. A few additional variables are supplied by the user, for instance the geospatial latitude / longitude coordinates of the plot, the year of harvest, the type of soil borne cellulosic residues (RCS) and the type of crop (winter cereals, canola, etc.). The first slice of pedoclimatic data in Table 1 includes in situ yields (RDT, RDN and RUN) for the estimation of treatment (TSQ; Equation 3) effect - $eFNP_{rdt}$, $eFNP_{rdn}$ & $eFNP_{run}$ (Equations 7 to 10). The second slice of data is used to adjust TSQ/rSQa (Equations 1 & 2) taking into account the level of *technicality* of the farmer explaining his/her relative target yield potential vis-à-vis his/her peers. Ad minima, the relative importance yield level can be estimated by the local or regional five-year yield average (QSQ; Equation 4) and compared to the gbm-derived rSQb reference for that particular plot. Similarly, the third slice of data is used to further adjust TSQ/rSQa to account for meteorology of the current year. An average regional annual yield value for an administrative zone - a French *département* for instance - providing ASQ (Equation 5) as compared to the gbm-derived rSQc will suffice.

Pedoclimatic data can be either remotely sensed or obtained via pedo-transfer functions (pdf) and stored on various national and international digital databases (Table 2). They can then be extracted as raster for each client plot delimited as a shapefile (.shp) and processed using a suitable boosting-like algorithm so as to generate estimates of rSQa in terms of grain (agronomic) yield (_rdt), protein yield (_rdn) and protein yield per unit of N-fertilizer (_ run) as influenced by this ensemble of of pedoclimatic variables/predictors. Stunningly, the present invention *does not* require that the farmer provide his/her own soil analyses data such as pH, soil carbon, CEC, etc.

For each local zone or mapping unit, shapefiles to generate rSQb and rSQc estimates are used, advantageously midsize as for instance nuts2 mapping units in Europe (https://ec.europa.eu/eurostat/fr/web/nuts/background). R packages and modules can be used for the implementation of these AI algorithm, and in particular the gbm model as proposed. Details and references pertaining to the use of such R codes - or scripts - are also available in Nolan et al. 2012, 2015 and 2018. This said, such gbm-like algorithms can also be implemented in other popular coding environments, such as Python for instance. Ad minima, boosting, shapefile and raster packages (modules) are needed.

[Table 1] : Proposed structure of the aforesaid pedoclimatic data (Table 2) to obtain the rSQa, rSQb and rSQc references

| rSQ | RDT | RDN | RUN | RCS | Pedoclimatic data derived and processed from sources in Table 2 |
|---|---|---|---|---|---|

TSQ data → rSQa

... plot coordinates and/or shapefiles

QSQ data → rSQb

... plot or local mapping unit coordinates and/or shapefiles

ASQ data → rSQc

... local or regional mapping unit coordinates and/or shapefiles

[Table 2_a] : Description of the top 57 of 227 predictors of rSQa used herein in the evaluation of eTSQ (Figure 6)

| Variable (predictor) | Description | Source |
|---|---|---|
| RCS | type of soil-borne crop residue | User supplied |
| wp2 | wilting point (surface) | Toth et al. 2014, Weynants et al. 2013 |
| FILT_CAPCA | qualitative index ; soil filtering capacity | Mako et al. 2017 |
| rfDec | rain erositivy / decembre | Panagos et al. 2015, 2017 |
| WATEM | water erosion | Panagos et al. 2015 |
| ks6 | ptf derived soil hydrological coefficient | Toth et al. 2014, Weynants et al. 2013 |
| sqicrop1 | biomass production potential | Toth et al. 2013 |
| windsoilloss | soil loss due to wind erosion | Borrelli et al. 2015, 2017 |
| soc | soil organic carbon | Toth et al. 2013, Ballabio et al. 2016 |
| sand1 | soil sand content | Toth et al. 2013, Ballabio et al. 2016 |
| rfSep | rain erosivity / septembre | Panagos et al. 2015, 2017 |
| eASQ | effect annual meteorological | Equation 5 |
| rSQb_rdt | pedoclimatic ref for QSQ | Equation 2 |
| wp7 | wilting point (depth) | Toth et al. 2014, Weynants et al. 2013 |
| n2o1 | soil surface $N_2O$ emissions | Lugato et al. 2017 |
| bd | bulk density | Toth et al. 2013, Ballabio et al. 2016 |
| QSQ_rdt | grain yield target yield | Equation 4 |
| CLIMANR | climate category | Mako et al. 2017 |
| WRBFU | soil classification (qualitative) | Mako et al. 2017 |
| eQSQ_rdt | Effect target yield potential | Equation 5 |
| rusleC | Universal soil loss equation; coefficient C | Panagos et al. 2015 |
| ks7 | ptf derived soil hydrological coefficient | Toth et al. 2014, Weynants et al. 2013 |
| ks2 | ptf derived soil hydrological coefficient | Toth et al. 2014, Weynants et al. 2013 |
| n2o2 | soil sub-surface $N_2O$ emissions | Lugato et al. 2017 |
| mrcths5 | ptf derived soil hydrological coefficient | Toth et al. 2014, Weynants et al. 2013 |
| SOC_erd | estimate Erosion soil organic carbon | Lugato et al. 2013, 2015 |
| MIN_TOP | mineralogy of topsoil (code) | Mako et al. 2017 |
| TEXTSUBDOM | soil texture (sub-domain) | Mako et al. 2017 |
| awc | available water capacity | Toth et al. 2013, Ballabio et al. 2016 |
| C_erd | estimate Erosion soil organic carbon | Lugato et al. 2013, 2015 |
| rusleLS | universal soil loss equation; coefficient ls | Panagos et al. 2015 |
| LAT | latitude of plot (wgs84) | User supplied |
| ks3 | ptf derived soil hydrological coefficient | Toth et al. 2014, Weynants et al. 2013 |
| rusleEros | estimate of soil erosion | Panagos et al. 2015 |
| TEXTSRFSEC | soil texture (code) | Mako et al. 2017 |
| CEC | cation exchange capacity | Mako et al. 2017 |
| cfrag | soil coarse fragements content | Toth et al. 2013, Ballabio et al. 2016 |
| CLT | type of crop (winter cereals mostly) | User supplied |
| ks4 | ptf derived soil hydrological coefficient | Toth et al. 2014, Weynants et al. 2013 |
| pHdelta | $ph_{cacl2}$ - $ph_{water}$ | Toth et al. 2013, Ballabio et al. 2016 |
| annee | year (as qualitative factor, not numeric) | User supplied |
| wp1 | wilting point (soil surface) | Toth et al. 2014, Weynants et al. 2013 |
| textureusda | soil texture cf. usda | Mako et al. 2017 |
| mrcm6 | ptf derived soil hydrological coefficient | Toth et al. 2014, Weynants et al. 2013 |
| rfJul | rainfall erosivity in july | Panagos et al. 2015, 2017 |
| silt1 | soil silt content | Toth et al. 2013, Ballabio et al. 2016 |
| rSQc_rdt | pedoclimatic ref for asq | Equation 2 |
| mrca2 | ptf derived soil hydrological coefficient | Toth et al. 2014, Weynants et al. 2013 |
| ksteu28 | ptf derived soil hydrological coefficient | Toth et al. 2014, Weynants et al. 2013 |
| mrcm4 | ptf derived soil hydrological coefficient | Toth et al. 2014, Weynants et al. 2013 |
| LON | longitude of plot (wgs84) | User supplied |
| N | soil organic nitrogen content | Ballabio et al. 2019 |
| MIN_SUB | mineralogy of subsoil (code) | Mako et al. 2017 |
| rfFeb | rainfall erosivity / febuary | Panagos et al. 2015 |
| PARMADO | dominant parent material (code) | Mako et al. 2017 |
| mrca1 | ptf derived soil hydrological coefficient | Toth et al. 2014, Weynants et al. 2013 |
| mrca5 | ptf derived soil hydrological coefficient | Toth et al. 2014, Weynants et al. 2013 |

[Table 2_b] : Relative influence (%) of the top 62 of 227 predictors of rSQa used herein in the evaluation of eTSQ (Figure 6)

| Variable (predictor) | rSQa_rdt | rSQa_rdn | rSQa_run |
|---|---|---|---|
| RCS | 3.976623 | 10.59648 | 8.483685 |
| wp2 | 8.551269 | 0 | 5.757846 |
| FILT_CAPCA | 0.648869 | 0.935972 | 5.670621 |
| rfDec | 0 | 0.097337 | 5.276435 |
| WATEM | 3.825471 | 1.490911 | 4.879564 |
| ks6 | 0.642067 | 0.965881 | 4.467809 |
| sqicrop1 | 0 | 0.050854 | 4.006847 |
| windsoilloss | 7.691067 | 11.64542 | 3.898484 |
| soc | 0.148106 | 0.365398 | 3.519017 |
| sand1 | 1.029479 | 1.435291 | 3.485561 |
| rfSep | 0.230369 | 1.759919 | 3.399363 |
| eASQ | 7.062252 | 5.975445 | 3.172641 |
| rSQb_rdt | 1.963456 | 0.363327 | 2.501035 |
| wp7 | 0 | 1.753718 | 2.403222 |
| n2o1 | 3.739242 | 3.04431 | 2.378346 |
| bd | 2.188856 | 2.699063 | 2.171127 |
| QSQ_rdt | 0 | 0.676948 | 1.943595 |
| CLIMANR | 2.31973 | 0.084117 | 1.934371 |
| WRBFU | 1.359929 | 1.960152 | 1.60841 |
| eQSQ_rdt | 0.851029 | 1.029894 | 1.485086 |
| rusleC | 4.443897 | 4.276772 | 1.338029 |
| ks7 | 0 | 0.729483 | 1.332079 |
| ks2 | 1.931553 | 2.378734 | 1.308375 |
| n2o2 | 0.453515 | 0.978786 | 1.208466 |
| mrcths5 | 0 | 0 | 1.180398 |
| SOC_erd | 0.649718 | 1.043922 | 1.091941 |
| MIN_TOP | 0 | 0 | 0.989046 |
| TEXTSUBDOM | 0 | 0 | 0.986494 |
| awc | 1.217389 | 3.023396 | 0.974126 |
| C_erd | 0.838514 | 0 | 0.917172 |
| rusleLS | 1.856447 | 2.85032 | 0.849863 |
| LAT | 1.389314 | 0.054491 | 0.830733 |
| ks3 | 0.517681 | 0.167441 | 0.818757 |
| rusleEros | 0.51203 | 1.768072 | 0.817684 |
| TEXTSRFSEC | 0.026381 | 0 | 0.79586 |
| CEC | 0 | 0.318116 | 0.775823 |
| cfrag | 0.101172 | 0.694208 | 0.693034 |
| CLT | 1.286645 | 0.214123 | 0.680802 |
| ks4 | 0 | 0 | 0.59314 |
| pHdelta | 0.455363 | 0 | 0.54243 |
| annee | 5.518194 | 1.113926 | 0.45713 |
| wp1 | 0.656317 | 0 | 0.434128 |
| textureusda | 0.598613 | 1.823047 | 0.42007 |
| mrcm6 | 0 | 0.691201 | 0.3603 |
| rfJul | 0.240539 | 0.542815 | 0.357606 |
| silt1 | 0 | 0.923453 | 0.356791 |
| rSQa_rdt | 0.77041 | 0.570325 | 0.316903 |
| mrca2 | 0.122166 | 0.046348 | 0.314512 |
| ksteu28 | 0.27659 | 0.214933 | 0.301384 |
| mrcm4 | 0 | 0 | 0.286614 |
| LON | 2.323985 | 0 | 0.284653 |
| N | 0 | 0 | 0.282093 |
| MIN_SUB | 0 | 0 | 0.271694 |
| rfFeb | 0.620238 | 0.385726 | 0.265301 |
| PARMADO | 3.358181 | 0 | 0.263913 |
| mrca1 | 0.027617 | 0.556174 | 0.263145 |
| mrca5 | 0.1249 | 0 | 0.248227 |

10

Variable (predictor) selection is accomplished by such gbm-like algorithms on the basis of their *relative influence* (Table 2_b). Parameter optimization - or *tuning* - can be accomplished using hyperparameter grids - discrete or continuous - to determine the optimum number of interacting nodes and trees, bagging fractions, shrinkage, etc. (Kuhn 2008, Touzani et al. 2018, etc.).

Knowing the latitude and longitude (WGS84 projection for example) these gbm-like algorithms determine the reference yield potential (rSQ) of the plot and compares it to the grain (RDT), protein (RDN) and per unit (RUN) yields as communicated by the user, for instance via www.polyor.fr. These pedoclimatic rSQ references are then used to assess whether these grain (RDT; kg-grain/ha), protein (RDN; kg-protein/ha) and per unit (RUN; $RDN/unit-N_{fertilizer}$) yields are effectively *higher than they would have been* without the FNP/onput treatment being assayed given current meteorological conditions (ASQ) and target yields (QSQ). There is thus no need to establish cumbersome micro-plots or control strips since the entire (treated) plot is harvested.

For this particular validation using AZB™ as a test FNP/onput, 90 plots of soft winter wheat were harvested in France from 2001 to 2015 on various types of cellulosic crop residues (Claude & Fillion 2004, Polyor 2019a, 2019b, 2019c, 2019d & 2019e). The locations of these plots are known and characterized using pedoclimatic data as structured as in Table 1. The 57 of 227 most influential predictors of rSQa in terms RDT, RDN and RUN are sourced and briefly described in Table 2_a. The relative (%) influence of these 57 variables are depicted in Figure 6 and - numerically - in Table 2_b.

Put simply, this approach to ifm - AgroNum™ (www.polyor.fr), anticipating the separation of consultancy and fertilizer sales integrates 3 factors affecting yield;

> ➢ ASQ: meteorology - annual weather conditions
> \> QSQ: technicity - the targeted yield potential
> ➢ TSQ: treatment - the FNP/onput treatment being assayed

To assess rationally the contributions - or influence - of these factors, they are compared to 3 gbm-derived rSQ pedoclimatic *references;*

> ➢ rSQa for ASQ
> ➢ rSQb for QSQ
> ➢ rSQc for TSQ

The effectiveness of the FNP/onput tested on a particular plot and the corresponding dN N-fertilizer dose results from the interaction of these 3 components. The improved agronomic efficiency of these recommended dN doses as compared to traditional dX N-fertilizer doses obtained via conventional balance sheet methods (dN/dX) has already been demonstrated in silico (Figure 9) via the Stics™ dynamic model (Brisson et al. 1998, 2002 & 2003) using data these AZB™ yield data. dN as a function of AZB™'s effectiveness (eAZB) yield more grain (RDT) and protein (RDN) and - more importantly - more grain protein per unit of $N_{fertilizer}$ (RUN ; alias *nitrogen-fertilizer use efficieny* - NUE). This improved NUE reduces *post-harvest residual mineral N* (PHN; Figure 9) and thus contributes to not only a reduction of non-point source pollution but also a reduction in organic matter degradation synonymous with soil conservation.

Together, AgroNum™ & AZB™ thus contribute to the advent of ifm. In fact, the effectiveness of ifm (eIFM; Equation 10) is the combination of eFNP (Equations 1 & 2) and eNPK as defined and assayed herein via the greater effectiveness of N-fertilizers (Figure 9) in synergy with AZB™.

[Equation 10]

$$eIFMrdt, rdn, run = eFNPrdt, rdn, run + eNPKrdt, rdn, run$$

This eFNP x eNPK synergy promoted by AgroNum™ (www.polyor.fr) involving the adjustment of dN as a function of eAZB will also contribute to sustainable agriculture by reducing yield gaps (Schils et al.2018); call it *ecologically intensive agriculture* (EIA) if you wish. |

**References**

Bannari et al. 2006. Estimating and mapping crop residues cover on agricultural lands using hyperspectral and IKONOS data. Remote Sensing of Environment 104 (2006) 447-459

Bannari et al. 2007. Potential of hyperspectral indices for estimating crop residue cover. Revue Télédétection, 2007, vol. 7, n° 1-2-3-4, p. 447-463

Borrelli P, E Lugato, L Montanarella et P Panagos. 2017. A new assessment of soil loss due to wind erosion in European agricultural soils using a quantitative spatially distributed modelling approach. Land Degrad. Develop. 28: 335-344

Brisson et al. 2008. Conceptual basis, formalisation and parameterization of Stics®. Éds Quae 78026 Versailles.

Claude, P-Ph et L. Fillion 2004. Effet de l'apport d'un inoculum bactérien aux résidus de culture de maïs-grain au sol sur le rendement et la qualité de blés d'hiver panifiables en France. Agrosolutions 15(1):23-29 (www.polyor.fr / https://cdn-cms.f-static.net/uploads/2922902/normal 5e8b1235c3bd4.pdf)

Comifer 2017. Guide de la fertilisation raisonnée. 2ième éd. Eds. France Agricole 75493 Paris

ESDAC 2019 / European Soil Data Centre (ESDAC), esdac.jrc.ec.europa.eu, European Commission, Joint Research Centre

Freund, Y et RE Schapire. 1997. A decision-theoretic generalization of on-line learning and an application to boosting. J. Comput. Syst. Sci. 55(1):119-139.

Kuhn, M. 2008. Building Predictive Models in R Using the caret Package. Journal of Statistical Software November 2008, Volume 28, Issue 5. http://www.jstatsoft.org/

Ladha et al. 2016. Global nitrogen budgets in cereals: a 50 year assessment for maize, rice and wheat production systems. Nature Scientific Reports 6:19355 | DOI: 10.1038/srep19355 1

Lairez et al. 2015. Agriculture et développement durable. Éditions Quae 78026 Versailles (Fr)

Lugato E, F Bampa, P Panagos, L Montanarella et A Jones. 2015. Potential carbon sequestration of European arable soils estimated by modelling a comprehensive set of management practices. Global Change Biology 20:3557-3567

Lugato E, L Paniagua, A Jones, W de Vries et A Leip. 2017. Complementing the topsoil information of the Land Use/Land Cover Area Frame Survey (LUCAS) with modelled N2O emissions. PLoS ONE 12(4): e0176111

Lugato, E, P Panagos, Francesca Bampa, Arwyn Jones et Luca Montanarella. 2014. A new baseline of organic carbon stock in European agricultural soils using a modelling approach. Global Change Biology 20, 313-326, doi: 10.1111/gcb.12292

Luo et al. 2013. Meta-modeling soil organic carbon sequestration potential and its application at regional scale, Ecological applications 23(2) : 408-420.

Makó, A, Kocsis, M, Barna, G et Tóth, G. 2017. Mapping the storing and filtering capacity of European soils; EUR 28392; doi:10.2788/49218

McCaffrey, DF, BA Griffin, D Almirall, ME Slaughter, R Ramchand et LF Burgette. 2013. A Tutorial on Propensity Score Estimation for Multiple Treatments Using Generalized Boosted Models. Stat Med. 32(19): 3388-3414.

Nolan et al. 2012. Verifiable metamodels for nitrate losses to drains and groundwater in the Corn Belt, USA. Environ. Sci. Technol. 46 (2), 901-908.

Nolan et al. 2015. A statistical learning framework for groundwater nitrate models of the Central Valley, California, USA. J. Hydrol. 531

Nolan et al. 2018. Metamodeling and mapping of nitrate flux in the unsaturated zone and groundwater, Wisconsin, USA. Journal of Hydrology 559 : 428-441

Pacheco, A et H McNairn. 2010. Evaluating multispectral remote sensing and spectral unmixing analysis for crop residue mapping. Remote Sensing of Environment 114 : 2219-2228

Panagos P, P Borrelli, J Poesen, C Ballabio, E Lugato, K Meusburger, L Montanarella et C Alewell. 2015. The new assessment of soil loss by water erosion in Europe. Environmental Science & Policy 54 (2015) 438-447

Panagos P, Van Liedekerke M., Jones A., Montanarella L. 2012. European Soil Data Centre: Response to European policy support & public data requirements. Land Use Policy 29(2):329-338

Panagos, P, K Meusburger, C Ballabio, P Borrelli et C Alewell. 2014. Soil erodibility in Europe: A high-resolution dataset based on LUCAS. Sci. Total Environ. 479/480: 189-200

Pasquale B, P Panagos et L Montanarella. 2015. New Insights into the Geography and Modelling of Wind Erosion in the European Agricultural Land. Application of a Spatially Explicit Indicator of Land Susceptibility to Wind Erosion. Sustainability 7 :8823

Polyor 2019a. AZB on winter cereals 2011, 2012 and 2013 - in situ paired-plot comparisons demonstrating the effect of rationing the recommended dose of Nf (dX) on the relative efficacy of AZB. www.polyor.fr / https://cdn-cms.f-static.net/uploads/2922902/normal 5ec8ca20ebd60.pdf

Polyor 2019b. AZB on winter cereals 2014 - residual mineral nitrogen (rNm) as affected by Nf regime (dX) and the addition of dextrose+ and a combination of molybdenum, tryptophan and calcium. www.polyor.fr / https://cdn-cms.f-static.net/uploads/2922902/normal 5ec8ca3663bb9.pdf

Polyor 2019c. AZB on winter cereals 2014 - Grain, protein and NUE as affected by Nf regime (dX) and the addition of dextrose in combination with molybdenum, tryptophan and calcium. www.polyor.fr / https://cdn-cms.f-static.net/uploads/2922902/normal 5ec8ca4350c13.pdf

Polyor 2019d. AZB on winter cereals 2015 - residual mineral nitrogen (Nm) as affected by AZB in the presence of dextrose in combination with Mo, tryptophan and calcium. www.polyor.fr / https://cdn-cms.f-static.net/uploads/2922902/normal 5ec8ca4b5710b.pdf

Polyor 2019e. AZB on winter cereals 2015 - Grain, protein and NUE as affected by Nf regime (dX) and the addition of dextrose in combination to Mo, tryptophan and calcium. www.polyor.fr / https://cdn-cms.f-static.net/uploads/2922902/normal 5ec8ca59a91a2.pdf

Ravier et al. 2015. Les travaux des GREN, révélateurs de controverses autour de la méthode du bilan. 12èmes Rencontres de la fertilisation raisonnée, 18 & 19 novembre 2015, Lyon (France)

Ravier et al. 2016. Mismatch between a science-based decision tool and its use: The caseof the balance-sheet method for nitrogen fertilization in France. NJAS - Wageningen Journal of Life Sciences (In press)

Ravier et al. 2017. Early nitrogen deficiencies favor high yield, grain protein content and N use efficiency in wheat. European J. Agron. 89 : 16-24

Ridgeway, G. 2019. Generalized Boosted Models: Guide to the gbm package. The R Project.

Schils et al. 2018. Cereal yield gaps across Europe. Eur. J Agron. 101 : 109-120.

Schloter et al. 2003. Indicators for evaluating soil quality. Agric. Ecosyst. Environ. 98:255-262

Sparks et al. 2011. A metamodeling framework for extending the application domain of process-based ecological models. Ecosphere 2(8):art90. doi: 10.1890/ES11-00128.1

Tóth et al. 2013. Continental-scale assessment of provisioning soil functions in Europe. Ecological Processes 2013 2:32.

Tóth et al. 2014. New generation of hydraulic pedo-transfer functions for Europe. Eur. J. Soil Sci. in Press.

Touzani S, J Granderson and S Fernandes. 2018. Gradient boosting machine for modeling the energy consumption of commercial buildings. Energy and Buildings 158, pp.1533-1543 / https://escholarship.org/uc/item/7931w7nd

van Es et al. 2019. Nitrate leaching reduced with Dynamic-Adaptive nitrogen management under contrasting soils and tillage. Soil Sci. Soc. Am. J. 84:220-231.

Weynants, M., Toth, G., Montanarella, L. et al. 2013. European Hydropedological Inventory (EU-HYDI). Publications Office of the European Union, Luxembourg

**Claims**

1. **Method of agronomic experimentation and integrated fertilizer management (ifm)** comprising the harvest of the *entire* field plot treated with some sort of crop production input including herein and in particular crop *onputs* (as defined) and this without the usual establishment of one or more control non-treated subplots - or strips - further comprising the following steps:

   • the grain (RDT) and grain protein (RDN) yield per hectare and grain protein yield per unit of N-fertilizer (RUN, *alias* nitrogen-fertilizer use efficiency, NUE) of the treated plot is compared to an index of the agronomic productivity - iSQ - characteristic of that particular plot so as to obtain the ratio values $TSQ_{rdt}$ = [RDT/iSQ - 1], $TSQ_{rdn}$ = [RDN/iSQ - 1] and $TSQ_{run}$ = [RUN/iSQ - 1],
   • these $TSQ_{rdt}$, $TSQ_{rdn}$ and $TSQ_{run}$ ratios are then compared to *references indices* of the plot's agronomic productivity, i.e. rSQa_rdt, rSQa_rdn and rSQa_run - respectively, obtained by metamodeling of pedoclimatic data for the aforesaid field-plot,
   • the metamodeling used to obtain estimates of rSQa, rSQb and rSQc consists of an automated *machine* - or model - learning algorithm, preferably of the boosting type, i.e. an automated learning technique for regression and classification problems which produces a prediction model in the form of an ensemble of weak prediction models - typically decision trees, in a stepwise fashion and generalizes them via an optimization of an arbitrary differentiable loss function so as to convert weak learners into powerful ones iteratively,
   • the relative efficacy of a particular crop onput (eFNP) in terms grain (RDT) and grain protein (RDN) per hectare and grain protein yield per unit of N-fertilizer (RUN, *alias* nitrogen-fertilizer use efficiency, NUE) is herein equal to the aforesaid corresponding TSQ/rSQ ratios and used for the calculation of the recommended doses of N-fertilizer, P and/or K (dN) as follows,

$$dN = a \times pRDT - pFNP$$

given that ;

   ✓ a = *b*/$eFNP_{run}$, *b* being the fertilizer N-requirement per unit yield as defined for instance in Comifer (2017),
   ✓ pFNP = pRDN - [RDN / $eFNP_{rdn}$], i.e. the contribution (supply) in N by the FNP, knowing that pRDT = [RDT · eFNPrdt] and pRDN = [RDN · eFNPrdn] are the adjusted target agronomic and protein yields, respectively, and that,
   ✓ $eFNP_{rdn}$ and $eFNP_{run}$ the eFNP values in terms of RDN and RUN alias *nitrogen fertilizer use efficiency* (NUE) - respectively,

and also comprising that ;
   • the [TSQ/rSQa - 1] ratio is adjusted by subtracting [QSQ/rSQb - 1] according to the equations eFNPrdt, rdn, run = [TSQ/rSQa - 1] - [QSQ/rSQb - 1] - [ASQ/ rSQc - 1]
   and
   QSQ = annualized plot target RDT / iSO for that plot or zone or mapping unit i.e. QSQ = annualized plot target RDT / average iSQ for that plot, geographic zone or mapping unit, and knowing that rSQb is the aforesaid agronomic productivity reference for that particular plot, zone or mapping unit and that the aforesaid target RDT is advantageously and for instance the five-year agronomic yield average for that plot reflecting the level of technicity of the farmer as applied to that plot, knowing that QSQ and rSQb can also be instead used as variables - predictors - of rSQa in the calculation of the relative effectiveness of TSQ as TSQ/rSQa (eTSQ),
   as well as that ;
   • the [TSQ/rSQa - 1] ratio is adjusted by subtracting [ASQ/rSQc - 1] according to the equations eFNPrdt, rdn, run = [TSQ/rSQa - 1] - [QSQ/rSQb - 1] - [ASQ/ rSQc - 1]
   and
   ASQ = annualized local potential RDT / iSQ for that zone or mapping unit i.e. ASQ = annualized local or regional potential RDT / average iSQ for that geographic zone or mapping unit, and knowing that rSQc is the aforesaid agronomic productivity reference for that particular geographic zone or mapping unit and that the aforesaid potential RDT is advantageously and for instance the annual local or regional agronomic crop yield average for the nearest zone, administrative and/or pedoclimatic mapping unit such as for example a French *région*, *département* or *canton,* knowing that ASQ and rSQc can be instead used as variables - predictors - of rSQa in the calculation of the relative effectiveness of TSQ as TSQ/rSQa (eTSQ),

and finally the recommended N-fertilizer doses comprised of otherwise conventional fertilizer materials are split and applied conventionally in-field to the soil or foliage.

2. **Method of agronomic experimentation and integrated fertilizer management (ifm)** according to the preceding claim **characterized in that** the values of rSQb and rSQc are obtained by meta-modelling of the pedoclimatic data from the aforesaid nearest zone, administrative and/or pedoclimatic mapping unit - as for example a French *région, department* or *canton* - against the average agronomic crop yields in those mapping units.

3. **Method of agronomic experimentation and integrated fertilizer management (ifm)** according to any one of the preceding claims, **characterized in that** iSQ, the agronomic productivity index for the plot, is a representative function of the soil's capacity to supply water and nutrients to the plant and act as a rooting matrix for optimal potential agronomic yield.

4. **Method of agronomic experimentation and integrated fertilizer management (ifm)** according to the preceding claim **characterized in that** the agronomic productivity index - iSQ - is a soil productivity index in terms of agronomic yield derived from a coherent system of soil function-based ecosystem provisioning biomass, food and fodder and by definition representative of the agro-pedoclimatic character of the plot and the potential aboveground biomass production over time - regardless of the fertilization rate and cultural practices.

5. **Method of agronomic experimentation and integrated fertilizer management (ifm)** according to any one of the preceding claims, **characterized in that** the pedoclimatic data characteristic of the said agronomic plot are geolocated and accessible as such via interactive - advantageously opensource - databases.

6. **Method of agronomic experimentation and integrated fertilizer management (ifm)** according to any one of the preceding claims, **characterized in that** the agro-pedoclimatic data characteristic of the said agronomic plot include predictors of mineralization rates of soil organic matter and wind and/or water soil erosion rates.

7. **Method of agronomic experimentation and integrated fertilizer management (ifm)** according to any one of the preceding claims, **characterized in that** eFNP is eAZB, and pFNP pAZB in the presence of azotobacteria-treated soil borne crop residues (RCS) - by inoculation for instance, allowing for the calculation of recommended doses of N-fertilizer (dN) as follows;

$$dN = a \times pRDT - pAZB$$

given that;

$a = \boldsymbol{b}/eAZB_{run}$, $\boldsymbol{b}$ being the fertilizer N-requirement per unit yield as defined for instance in Comifer (2017), pAZB = pRDN - [RDN / eAZB$_{rdn}$], i.e. the contribution (supply) in N by the AZB, knowing that pRDT = [RDT · eAZBrdt] and pRDN = [RDN · eAZBrdn] are the adjusted target agronomic and protein yields, respectively, and that, eAZB$_{rdn}$ and eAZB$_{run}$ the eAZB values in terms of RDN and RUN alias *nitrogen fertilizer use efficiency* (NUE) - respectively,

and finally that the thus recommended N-fertilizer doses comprised of otherwise conventional fertilizer materials are split and applied conventionally in-field to the soil or foliage.

**Patentansprüche**

1. **Verfahren für agronomische Versuche und integriertes Düngemittelmanagement (ifm),** das die Ernte der *gesamten* Parzelle umfasst, die mit einer Art von Pflanzenproduktions-Zusatz behandelt wurde, darin eingeschlossen und insbesondere Nutzpflanzen-Onputs (wie definiert), und dies ohne die übliche Schaffung einer oder mehrerer unbehandelter Kontroll- Teilparzellen - oder Streifen -, die zudem die folgenden Schritte umfasst;

• der Korn- (RDT) und Körnerproteinertrag (RDN) pro Hektar und der Körnerproteinertrag pro N-Dünger-Einheit (RUN, auch Stickstoffdünger-Effizienz, NUE) der behandelten Parzelle wird mit einem Index der agronomischen Produktivität - iSQ - verglichen, der charakteristisch für diese spezielle Parzelle ist, um die Verhältniswerte $TSQ_{rdt}$ = [RDT/iSQ - 1], $TSQ_{rdn}$ = [RDN/iSQ - 1] und $TSQ_{run}$ = [RUN/iSQ - 1] zu ermitteln

• diese $TSQ_{rdt}$, $TSQ_{rdn}$ und $TSQ_{run}$ -Verhältnisse werden dann mit *Vergleichsindizes* für die agronomischen Produktivität der Parzelle, d. h. rSQa_rdt, rSQa_rdn bzw. rSQa_run, verglichen, die durch Metamodellierung der pedoklimatischen Daten für die besagte Feldparzelle ermittelt wurden,

• die zur Ermittlung der Schätzungen von rSQa, rSQb und rSQc verwendete Metamodellierung besteht aus einem automatisierten *Maschinen-* oder Modell-Lernalgorithmus, bevorzugt vom Boosting-Typ, d.h. einer automatisierten Lerntechnik für Regressions- und Klassifizierungsprobleme, die schrittweise ein Vorhersagemodell in Form mehrerer schwächerer Vorhersagemodelle - gewöhnlicherweise Entscheidungsbäume - erstellt und diese durch Optimierung einer beliebig differenzierbaren Verlustfunktion verallgemeinert, um so iterativ schwache Lerner in leistungsstarke zu verwandeln,

• die relative Leistungsfähigkeit einer bestimmten Kultur (eFNP) hinsichtlich Korn (RDT) und Körnerprotein (RDN) pro Hektar und der Körnerproteinertrag pro N-Dünger-Einheit (RUN, *auch* Stickstoffdünger-Nutzungseffizienz, NUE) ist hier gleich den oben genannten entsprechenden TSQ/rSQ-Verhältnissen und dient zur Berechnung der empfohlenen Dosen von N-Dünger, P und/oder K (dN) wie folgt,

$$dN = a \times pRDT - pFNP$$

vorausgesetzt, dass;

✓ a = *b*/eFNP$_{run}$, wobei *b* der Düngemittel-N-Bedarf pro Ertragseinheit ist, wie z.B. in Comifer (2017) definiert,

✓ pFNP = pRDN - [RDN / eFNP$_{rdn}$], d. h. der Beitrag (Versorgung) an N durch den FNP, wobei pRDT = [RDT · eFNPrdt] und pRDN = [RDN · eFNPrdn] die angepassten Agronomischen- bzw. Eiweiß-Zielerträge sind, und dass,

✓ eFNP$_{rdn}$ und eFNP$_{run}$ die eFNP-Werte in Bezug auf RDN bzw. RUN - auch bekannt als *Stickstoffdünger-Effizienz* (NUE) - sind,

und auch Folgendes umfassen;

• das Verhältnis [TSQ/rSQa - 1] wird durch Subtraktion von [QSQ/rSQb - 1] gemäß den Gleichungen eFNPrdt, rdn, run = [TSQ/rSQa - 1] - [QSQ/rSQb - 1] - [ASQ/rSQc -1] und QSQ = jährliches Parzellenziel RDT / durchschnittliches iSQ für diese Parzelle, geografische Region oder Kartierungseinheit angepasst, und wissend, dass rSQb die oben erwähnte Referenz der agronomischen Produktivität für diese bestimmte Parzelle, geografische Region oder Kartierungseinheit ist und dass der oben genannte Zielwert RDT vorteilhaft und zum Beispiel der fünfjährige agronomische Ertragsdurchschnitt für diese Parzelle ist, der das Niveau der vom Landwirt auf dieser Parzelle angewandten Technik widerspiegelt, wissend, dass QSQ und rSQb stattdessen auch als Variablen - Prädiktoren - von rSQa bei der Berechnung der relativen Effektivität von TSQ als TSQ/rSQa (eTSQ) verwendet werden können,

sowie darin, dass;

• das Verhältnis [TSQ/rSQa - 1] durch Subtraktion von [ASQ/rSQc - 1] gemäß den Gleichungen eFNPrdt, rdn, run = [TSQ/rSQa - 1] - [QSQ/rSQb - 1] - [ASQ/rSQc -1] und ASQ = jährliches lokales oder regionales RDT Potential / durchschnittliches iSQ und für diese geografische Region oder Kartierungseinheit angepasst wird, und wissend, dass rSQc die zuvor genannte Referenz der agronomischen Produktivität für diese bestimmte geografische Region oder Kartierungseinheit ist und dass der zuvor genannte potenzielle RDT vorteilhaft und zum Beispiel der jährliche lokale oder regionale Durchschnitt der Ernteerträge für die nächstgelegene Region, administrative und/oder pedoklimatische Kartierungseinheit ist, wie zum Beispiel für eine französische Region, ein *Département* oder einen *Kanton,* wobei ASQ und rSQc stattdessen als Variablen - Prädiktoren - von rSQa bei der Berechnung der relativen Effektivität von TSQ als TSQ/rSQa (eTSQ) verwendet werden können,

und schließlich die empfohlenen N-Düngerdosen, die aus sonst konventionellen Düngemitteln bestehen, aufgeteilt und konventionell im Feld auf den Boden oder das Blattwerk ausgebracht werden.

2. **Verfahren für agronomische Versuche und integriertes Düngemittelmanagement (ifm)** gemäß dem vorherigen Anspruch, **dadurch gekennzeichnet, dass** die Werte von rSQb und rSQc durch Meta-Modellierung der pedoklimatischen Daten der zuvor genannten nächsten Gebiets-, Verwaltungs- und/oder pedoklimatischen Kartierungseinheit - wie z.B. einer französischen *Région,* eines *Départements* oder eines *Kantons* - gegen die durchschnittlichen Ernteerträge in diesen Kartierungseinheiten erhalten werden.

3. **Verfahren für agronomische Versuche und integriertes Düngemittelmanagement (ifm)** gemäß einem der vorherigen Ansprüche, **dadurch gekennzeichnet, dass** der iSQ, der Agrarproduktivitätsindex für die Parzelle, eine repräsentative Funktion der Kapazität des Bodens, der Pflanze Wasser und Nährstoffe zur Verfügung zu stellen und als Wurzelmatrix für einen potentiell optimalen Agrarertrag zu dienen, ist.

4. **Verfahren für agronomische Versuche und integriertes Düngemittelmanagement (ifm)** nach dem vorhergehenden Anspruch, **dadurch gekennzeichnet, dass** der Agrarproduktivitätsindex - iSQ - ein Bodenproduktivitätsindex in Bezug auf den Agrarertrag ist, der aus einem kohärenten System von bodenfunktionsbasierten Ökosystemen abgeleitet wird, die Biomasse, Nahrung und Futter liefern, und der per Definition repräsentativ für den agro-pedoklimatischen Zustand der Parzelle und die potenzielle oberirdische Biomasseproduktion im Laufe der Zeit ist - ungeachtet der Düngungsrate und der Kulturverfahren.

5. **Verfahren für agronomische Versuche und integriertes Düngemittelmanagement (ifm)** gemäß einem der vorherigen Ansprüche, **dadurch gekennzeichnet, dass** die für die genannte agronomische Parzelle typischen pedoklimatischen Daten geolokalisiert und als solche über interaktive - vorzugsweise Open-Source - Datenbanken zugänglich sind.

6. **Verfahren für agronomische Versuche und integriertes Düngemittelmanagement (ifm)** gemäß einem der vorherigen Ansprüche, **dadurch gekennzeichnet, dass** die für die genannte agronomische Parzelle typischen agro-pedoklimatischen Daten Prädiktoren für die Mineralisierungsraten organischer Bodensubstanz und die Bodenerosionsraten durch Wind und/oder Wasser enthalten.

7. **Verfahren für agronomische Versuche und integriertes Düngemittelmanagement (ifm)** gemäß einem der vorherigen Ansprüche, **dadurch gekennzeichnet, dass** eFNP eAZB und pFNP pAZB sind, und zwar bei Vorliegen von mit Azotobakterien behandelten bodengebundenen Ernterückständen (RCS) - z.B. durch Inokulation, die die Berechnung der empfohlenen N-Düngerdosen (dN) wie folgt ermöglicht;

$$dN = a \times pRDT - pAZB$$

vorausgesetzt, dass;

a = $b$/eAZB$_{run}$, wobei $b$ der Düngemittel-N-Bedarf pro Ertragseinheit ist, wie z.B. in Comifer (2017) definiert, pAZB = pRDN - [RDN / eAZB$_{rdn}$], d.H. der Beitrag (Versorgung) des AZB in N, wobei pRDT = [RDT · eAZBrdt] und pRDN = [RDN · eAZBrdn] die angepassten Agrar- bzw. Eiweiß-Zielerträge sind, und dass eAZB$_{rdn}$ und eAZB$_{run}$ die eAZB-Werte in Bezug auf RDN bzw. RUN - auch bekannt als *Stickstoffdünger-Effizienz* (NUE) - sind,

und schließlich, dass die so empfohlenen N-Düngerdosen, die aus sonst konventionellen Düngemitteln bestehen, aufgeteilt und konventionell im Feld auf den Boden oder das Blattwerk ausgebracht werden.

**Revendications**

1. **Méthode d'expérimentation agronomique et de fertilisation raisonnée (FR)** consistant en la récolte de l'ensemble de la parcelle de campagne traitée avec une matière fertilisante y compris ici et en particulier une fertilisation non-pondérale (telle que définie) et ce sans l'établissement habituel d'une ou plusieurs sous-parcelles de contrôle non traitées - ou bandes - caractérisées en cela ;

• le rendement en grains (RDT) et en protéines de grain (RDN) par hectare et le rendement en protéines céréalières par unité d'engrais azoté (RUN, alias efficacité d'utilisation des engrais azotés, NUE) de la parcelle traitée sont comparés à un indice de productivité agronomique - iSQ - caractéristique de cette parcelle afin d'obtenir les valeurs de rapport TSQrdt = [RDT/iSQ - 1], TSQrdn = [RDN/iSQ - 1] et TSQrun = [RUN/iSQ - 1],

• ces rapports $TSQ_{rdt}$, TSQrdn et TSQrun sont ensuite comparés à des *indices de référence* de la productivité agronomique de la parcelle, c'est-à-dire rSQa_rdt, rSQa_rdn et rSQa_run - respectivement, obtenus par métamodélisation de données pédoclimatiques pour la parcelle agricole susmentionnée,

• la métamodélisation pou l'estimations de rSQa, rSQb et rSQc consiste en un algorithme d'apprentissage automatisé de machine - ou de modèle - de préférence du type boosting, c'est-à-dire une technique d'apprentissage automatisée pour les problèmes de régression et de classification qui produit un modèle de prédiction sous la forme d'un ensemble de modèles de prédiction faibles - généralement des arbres de décision, de manière progressive et les généralise via une optimisation d'une fonction de perte différentiable arbitraire afin de convertir de manière itérative les apprenants faibles en apprenants puissants,

• l'efficacité relative d'une fertilisation non-pondérale FNP (eFNP) en termes de rendements en grain (RDT) et protéines (RDN) par hectare et de RDN par unité d'engrais azoté (RUN, alias nitrogen use efficiency, NUE angl.) est ici égale aux rapports TSQ/rSQ correspondants susmentionnés et utilisée pour le calcul des doses recommandées d'engrais azoté, de P et/ou de K (dN) comme suit,

$$dN = a \times pRDT - pFNP$$

étant donné que ;

✓ a = **b**/eFNPrun, *b* étant l'engrais N-requis par unité de rendement tel que défini par exemple dans Comifer (2017),

✓ pFNP = pRDN - [RDN / eFNPrdn], c'est-à-dire la contribution (fourniture) en N par le FNP, sachant que pRDT = [RDT · eFNPrdt] et pRDN = [RDN · eFNPrdn] sont les rendements agronomiques et protéiques cibles ajustés, respectivement, et que,

✓ $eFNP_{rdn}$ et eFNPrun les valeurs eFNP en termes de RDN et RUN alias *efficacité d'utilisation des engrais azotés* (NUE) - respectivement,

et aussi caractérisé en cela ;

• le rapport [TSQ/rSQa - 1] est ajusté en soustrayant [QSQ/rSQb - 1] selon les équations 2 et 4, c'est-à-dire QSQ = rendement RDT cible annualisé pour la parcelle / iSQ moyen pour ce site, zone géographique ou unité cartographique, sachant que rSQb est la référence de productivité agronomique susmentionnée pour cette parcelle, zone ou unité cartographique particulière et que la cible RDT susmentionnée est avantageusement et par exemple la moyenne de rendement agronomique sur cinq ans pour cette parcelle reflétant le niveau de technicité de l'agriculteur, et sachant que QSQ et rSQb peuvent également être utilisés comme variables - prédicteurs - de rSQa dans le calcul de l'efficacité relative de TSQ en tant que TSQ/rSQa (eTSQ),

ainsi que dans celui-ci ;

• le rapport [TSQ/rSQa - 1] est ajusté en soustrayant [ASQ/rSQc - 1] selon les équations 2 et 5, c'est-à-dire ASQ = RDT potentiel local ou régional annualisé / iSQ moyen pour cette zone géographique ou unité cartographique, et sachant que rSQc est la référence de productivité agronomique susmentionnée pour cette zone géographique ou unité cartographique particulière et que le RDT potentiel susmentionné est avantageusement et par exemple la moyenne annuelle de rendement agronomique local ou régional pour la zone, l'unité de cartographie administrative et/ou pédoclimatique la plus proche telle que par exemple une région, un *département* ou *canton* Français, sachant que l'ASQ et le rSQc peuvent être utilisés comme variables - prédicteurs - de rSQa dans le calcul de l'efficacité relative du TSQ en tant que TSQ/rSQa (eTSQ),

et enfin, en ce sens que les doses recommandées d'engrais azotés composés d'engrais autrement conventionnels sont fractionnées et appliquées de manière conventionnelle sur le terrain sur le sol ou le feuillage.

2. **Procédé d'expérimentation agronomique et de fertilisation raisonnée (FR)** selon la revendication précédente **caractérisé en ce que** les valeurs de rSQb et rSQc sont obtenues par méta-modélisation des données pédoclimatiques de la zone la plus proche, de l'unité de cartographie administrative et/ou pédoclimatique susmentionnée - comme par exemple une région, un *département* ou un *canton* Français - par rapport aux rendements agronomiques moyens des cultures dans ces unités cartographiques.

3. **Procédé d'expérimentation agronomique et de fertilisation raisonnée (FR)** selon l'une quelconque des revendications précédentes, **caractérisé en ce que** iSQ, l'indice de productivité agronomique de la parcelle, est une fonction représentative de la capacité du sol à fournir de l'eau et des nutriments à la plante et à agir comme une matrice d'enracinement pour un rendement agronomique potentiel optimal.

4. **Procédé d'expérimentation agronomique et de fertilisation raisonnée (FR)** selon la revendication précédente **caractérisé en ce que** l'indice de productivité agronomique - iSQ - est un indice de productivité du sol en termes de rendement agronomique dérivé d'un système cohérent d'écosystèmes basés sur la fonction du sol fournissant de la biomasse, de la nourriture et du fourrage et par définition représentatif du caractère agro-pédo-pédoclimatique de la parcelle et de la production potentielle de biomasse hors sol dans le temps - quels que soient le taux de fertilisation et les pratiques culturales.

5. **Procédé d'expérimentation agronomique et de fertilisation raisonnée (FR)** selon l'une quelconque des revendications précédentes, **caractérisé en ce que** les données pédoclimatiques caractéristiques de ladite parcelle agronomique sont géolocalisées et accessibles en tant que telles via des bases de données interactives - avantageusement opensource.

6. **Méthode d'expérimentation agronomique et de fertilisation raisonnée (FR)** selon l'une quelconque des revendications précédentes, **caractérisée en ce que** les données agro-pédoclimatiques caractéristiques de ladite parcelle agronomique comprennent des prédicteurs des taux de minéralisation de la matière organique du sol et des taux d'érosion du sol par le vent et/ou l'eau.

7. **Procédé d'expérimentation agronomique et de fertilisation raisonnée (FR)** selon l'une quelconque des revendications précédentes, **caractérisé en ce que** l'eFNP est eAZB, et le pFNP pAZB en présence de résidus de culture dans le sol (RCS) traités par azotobactéries - par inoculation par exemple, permettant le calcul des doses recommandées d'engrais azoté (dN) comme suit ;

$$dN = a \times pRDT - pAZB$$

compte tenu de cela;

a = $b$/eAZBrun, $b$ étant le besoin en engrais N par unité de rendement telle que définie par exemple dans Comifer (2017),
pAZB = pRDN - [RDN / eAZBrdn], c'est-à-dire la contribution (fourniture) en N d'AZB, sachant que pRDT = [RDT · eAZBrdt] et pRDN = [RDN · eAZBrdn] sont les rendements agronomiques et protéiques cibles ajustés, respectivement, et que,
eAZBrdn et eAZBrun les valeurs eAZB en termes de RDN et RUN alias *nitrogen use efficiency* (NUE, angl.) - respectivement,

et enfin que les doses d'engrais azoté ainsi recommandées, composées d'engrais autrement conventionnels, sont fractionnées et appliquées de manière conventionnelle au champs, sur le sol ou le feuillage.

[Fig.1]

eASQ

eQSQ

eTSQ

[Fig.2]

PEDOCLIMATIC DATA

gbm_rSQa      gbm_rSQb      gbm_rSQc

rSQa      rSQb      rSQc

eTSQ      eQSQ      eASQ

eFNP → dN

PEDOCLIMATIC DATA

gbm_rSQb      gbm_rSQc

rSQb      rSQc

eQSQ      eASQ

gbm_rSQa

rSQa

eTSQ

eFNP → dN

y = 0.9923x
R² = 0.9976

y = 0.9963x
R² = 0.9972

y = 0.9938x
R² = 0.9708

[Fig.3]

[Fig.4]

[Fig.5]

Relative influence ($\log_{10}$ % ≥ 0.250) of the top 57 (25% of 227) pedoclimatic variables on the prediction of eFNP_run (here, eAZB) accounting for approx. 97% of the predictive variation (inset)

[Fig.6]

[Fig.7]

# How does it work ?

Plot location (lat/lon) ?
Soil borne crop residues?
  ➢ What type?

Grain yield and protein content?
For 1st time users or AgroNum ;
  ➢ What is your $N_{fertilizer}$ rate?

AgroNum$^{MC}$ AI algorithms

rSQt (reference )

eFNP

dN ($N_{fertilizer}$ dosage)

## That's it !

You will thus know the relative effectiveness of your biostimulant, biofertilizer or that of any other FNP on your plot as well as the corresponding dN N-fertilizer dose.

[Fig. 8]

[Fig.9]

[Fig.10]

[Fig.11]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3335536 A
- WO 2013168483 A1
- WO 0145490 A1
- WO 03046156 A

**Non-patent literature cited in the description**

- **BANNARI et al.** Estimating and mapping crop residues cover on agricultural lands using hyperspectral and IKONOS data.. *Remote Sensing of Environment*, 2006, vol. 104, 447-459
- **BANNARI et al.** Potential of hyperspectral indices for estimating crop residue cover.. *Revue Télédétection*, 2007, vol. 7 (1-2-3-4), 447-463
- **BORRELLI P** ; **E LUGATO** ; **L MONTANARELLA** ; **P PANAGOS**. A new assessment of soil loss due to wind erosion in European agricultural soils using a quantitative spatially distributed modelling approach. *Land Degrad. Develop.*, 2017, vol. 28, 335-344
- **BRISSON et al.** Conceptual basis, formalisation and parameterization of Stics®.. 2008
- **CLAUDE, P-PH** ; **L. FILLION**. Effet de l'apport d'un inoculum bactérien aux résidus de culture de maïs-grain au sol sur le rendement et la qualité de blés d'hiver panifiables en France. *Agrosolutions*, 2004, vol. 15 (1), 23-29, www.polyor.fr / https://cdn-cms.f-static.net/uploads/2922902/normal 5e8b1235c3bd4.pdf
- **COMIFER**. Guide de la fertilisation raisonnée. 2017
- **FREUND, Y** ; **RE SCHAPIRE**. A decision-theoretic generalization of on-line learning and an application to boosting.. *J. Comput. Syst. Sci.*, 1997, vol. 55 (1), 119-139
- **KUHN, M.** Building Predictive Models in R Using the caret Package.. *Journal of Statistical Software*, November 2008, vol. 28 (5), http://www.jstatsoft.org/
- **LADHA et al.** Global nitrogen budgets in cereals: a 50 year assessment for maize, rice and wheat production systems.. *Nature Scientific Reports*, 2016, vol. 6, 19355
- **LAIREZ et al.** Agriculture et développement durable. 2015
- **LUGATO E** ; **F BAMPA** ; **P PANAGOS** ; **L MONTANARELLA** ; **A JONES**. Potential carbon sequestration of European arable soils estimated by modelling a comprehensive set of management practices. *Global Change Biology*, 2015, vol. 20, 3557-3567
- **LUGATO E** ; **L PANIAGUA** ; **A JONES** ; **W DE VRIES** ; **A LEIP**. Complementing the topsoil information of the Land Use/Land Cover Area Frame Survey (LUCAS) with modelled N2O emissions. *PLoS ONE*, 2017, vol. 12 (4), e0176111
- **LUGATO, E** ; **P PANAGOS** ; **FRANCESCA BAMPA** ; **ARWYN JONES** ; **LUCA MONTANARELLA**. A new baseline of organic carbon stock in European agricultural soils using a modelling approach. *Global Change Biology*, 2014, vol. 20, 313-326
- **LUO et al.** Meta-modeling soil organic carbon sequestration potential and its application at regional scale. *Ecological applications*, 2013, vol. 23 (2), 408-420
- **MAKÓ, A** ; **KOCSIS, M** ; **BARNA, G** ; **TÓTH, G.** Mapping the storing and filtering capacity of European soils. *EUR 28392*, 2017
- **MCCAFFREY, DF** ; **BA GRIFFIN** ; **D ALMIRALL** ; **ME SLAUGHTER** ; **R RAMCHAND** ; **LF BURGETTE**. A Tutorial on Propensity Score Estimation for Multiple Treatments Using Generalized Boosted Models.. *Stat Med.*, 2013, vol. 32 (19), 3388-3414
- **NOLAN et al.** Verifiable metamodels for nitrate losses to drains and groundwater in the Corn Belt, USA. *Environ. Sci. Technol.*, 2012, vol. 46 (2), 901-908
- **NOLAN et al.** A statistical learning framework for groundwater nitrate models of the Central Valley, California, USA. *J. Hydrol.*, 2015, 531
- **NOLAN et al.** Metamodeling and mapping of nitrate flux in the unsaturated zone and groundwater, Wisconsin, USA. *Journal of Hydrology*, 2018, vol. 559, 428-441
- **PACHECO, A** ; **H MCNAIRN**. Evaluating multi-spectral remote sensing and spectral unmixing analysis for crop residue mapping.. *Remote Sensing of Environment*, 2010, vol. 114, 2219-2228

- **PANAGOS P** ; **P BORRELLI** ; **J POESEN** ; **C BALLABIO** ; **E LUGATO** ; **K MEUSBURGER** ; **L MONTANARELLA** ; **C ALEWELL**. The new assessment of soil loss by water erosion in Europe. *Environmental Science & Policy*, 2015, vol. 54 (2015), 438-447
- **PANAGOS P** ; **VAN LIEDEKERKE M.** ; **JONES A.** ; **MONTANARELLA L.** European Soil Data Centre: Response to European policy support & public data requirements. *Land Use Policy*, 2012, vol. 29 (2), 329-338
- **PANAGOS, P** ; **K MEUSBURGER** ; **C BALLABIO** ; **P BORRELLI** ; **C ALEWELL**. Soil erodibility in Europe: A high-resolution dataset based on LUCAS.. *Sci. Total Environ.*, 2014, vol. 479/480, 189-200
- **PASQUALE B** ; **P PANAGOS** ; **L MONTANARELLA**. New Insights into the Geography and Modelling of Wind Erosion in the European Agricultural Land. Application of a Spatially Explicit Indicator of Land Susceptibility to Wind Erosion. *Sustainability*, 2015, vol. 7, 8823
- **POLYOR**. *AZB on winter cereals 2011, 2012 and 2013 - in situ paired-plot comparisons demonstrating the effect of rationing the recommended dose of Nf (dX) on the relative efficacy of AZB*, 2019, www.polyor.fr / https://cdn-cms.f-static.net/uploads/2922902/normal 5ec8ca20ebd60.pdf
- **POLYOR**. *AZB on winter cereals 2014 - residual mineral nitrogen (rNm) as affected by Nf regime (dX) and the addition of dextrose+ and a combination of molybdenum, tryptophan and calcium*, 2019, www.polyor.fr / https://cdn-cms.f-static.net/uploads/2922902/normal 5ec8ca3663bb9.pdf
- **POLYOR**. *AZB on winter cereals 2014 - Grain, protein and NUE as affected by Nf regime (dX) and the addition of dextrose in combination with molybdenum, tryptophan and calcium*, 2019, www.polyor.fr / https://cdn-cms.f-static.net/uploads/2922902/normal 5ec8ca4350c13.pdf
- **POLYOR**. *AZB on winter cereals 2015 - residual mineral nitrogen (Nm) as affected by AZB in the presence of dextrose in combination with Mo, tryptophan and calcium*, 2019, www.polyor.fr / https://cdn-cms.f-static.net/uploads/2922902/normal 5ec8ca4b5710b.pdf
- **POLYOR**. *AZB on winter cereals 2015 - Grain, protein and NUE as affected by Nf regime (dX) and the addition of dextrose in combination to Mo, tryptophan and calcium*, 2019, www.polyor.fr / https://cdn-cms.f-static.net/uploads/2922902/normal 5ec8ca59a91a2.pdf
- **RAVIER et al.** Les travaux des GREN, révélateurs de controverses autour de la méthode du bilan.. *12èmes Rencontres de la fertilisation raisonnée*, 18 November 2015
- **RAVIER et al.** Mismatch between a science-based decision tool and its use: The caseof the balance-sheet method for nitrogen fertilization in France. *NJAS - Wageningen Journal of Life Sciences (In press)*
- **RAVIER et al.** Early nitrogen deficiencies favor high yield, grain protein content and N use efficiency in wheat.. *European J. Agron.*, 2017, vol. 89, 16-24
- **RIDGEWAY, G.** Generalized Boosted Models: Guide to the gbm package. *The R Project*, 2019
- **SCHILS et al.** Cereal yield gaps across Europe. *Eur. J Agron.*, 2018, vol. 101, 109-120
- **SCHLOTER et al.** Indicators for evaluating soil quality. *Agric. Ecosyst. Environ.*, 2003, vol. 98, 255-262
- **SPARKS et al.** A metamodeling framework for extending the application domain of process-based ecological models. *Ecosphere*, 2011, vol. 2 (8), art90
- **TÓTH et al.** Continental-scale assessment of provisioning soil functions in Europe. *Ecological Processes*, 2013, vol. 2, 32
- **TÓTH et al.** New generation of hydraulic pedotransfer functions for Europe. *Eur. J. Soil Sci. in Press*, 2014
- **TOUZANI S** ; **J GRANDERSON** ; **S FERNANDES**. Gradient boosting machine for modeling the energy consumption of commercial buildings. *Energy and Buildings*, 2018, vol. 158, 1533-1543, https://escholarship.org/uc/item/7931w7nd
- **VAN ES et al.** Nitrate leaching reduced with Dynamic-Adaptive nitrogen management under contrasting soils and tillage. *Soil Sci. Soc. Am. J.*, 2019, vol. 84, 220-231
- **WEYNANTS, M.** ; **TOTH, G.** ; **MONTANARELLA, L. et al.** European Hydropedological Inventory (EU-HYDI).. *Publications Office of the European Union, Luxembourg*, 2013